Europäisches Patentamt

European Patent Office

Office européen des brevets

(19)

(11) Numéro de publication: **0 249 930 B1**

(12) **FASCICULE DE BREVET EUROPEEN**

(45) Date de publication de fascicule du brevet:
25.09.91

(51) Int. Cl.⁵: **H04L 1/22**

(21) Numéro de dépôt: **87108624.5**

(22) Date de dépôt: **16.06.87**

(54) **Procédé de synchronisation de deux trains binaires.**

(30) Priorité: **18.06.86 FR 8608805**

(43) Date de publication de la demande:
**23.12.87 Bulletin 87/52**

(45) Mention de la délivrance du brevet:
**25.09.91 Bulletin 91/39**

(84) Etats contractants désignés:
**DE FR GB IT NL**

(56) Documents cités:
**FR-A- 2 569 323**

**PATENT ABSTRACTS OF JAPAN, vol. 9, no.
284 (E-357)[2007], 12 novembre 1985; & JP-
A-60 125 031**

(73) Titulaire: **ALCATEL TRANSMISSION PAR FAIS-
CEAUX HERTZIENS A.T.F.H.**
**55, rue Greffulhe**
**F-92301 Levallois-Perret Cédex(FR)**

(72) Inventeur: **Guerin, François**
**10, rue des Raimonières**
**F-86000 Poitiers(FR)**

(74) Mandataire: **Weinmiller, Jürgen et al**
**Lennéstrasse 9 Postfach 24**
**W-8133 Feldafing(DE)**

EP 0 249 930 B1

## Description

L'invention concerne un procédé de synchronisation de deux trains binaires en vue de faire une commutation d'un train sur l'autre et un dispositif de mise en oeuvre de ce procédé.

Dans les transmissions par faisceaux hertziens numériques, on utilise une mesure du taux d'erreur de bit pour estimer la qualité d'une liaison. Si la qualité est mauvaise l'information est envoyée sur un canal de secours. Il est alors important de ne pas détériorer le contenu du message lors d'une commutation du canal normal sur le canal secours.

La détérioration de la qualité d'une liaison étant relativement lente, on profite de ce temps de répit pour essayer de mettre le train du canal secours en synchronisme avec le train du canal qui se détériore. Après quoi on effectue une commutation non perceptible par l'utilisateur.

Un document de l'art connu, le "Patent abstracts of Japan" JP-A-60 125 031, décrit un dispositif de commutation de deux trains binaires comprenant deux mémoires, une boucle de verrouillage de phase reliée à deux dispositifs de blocage d'écriture (associé aux deux trains d'horloge), un circuit comparateur recevant les trains binaires lus dans les deux mémoires tampons et un "circuit de décision de phase" qui permet de générer une impulsion lorsque le contenu des mémoires ne coïncide pas, de façon à inverser l'avis d'écriture des mémoires.

L'invention a pour objet d'augmenter la plage de synchronisation des deux trains binaires.

L'invention propose à cet effet un procédé de synchronisation de deux trains binaires en vue de faire une commutation du premier train sur le second, caractérisé en ce que l'on utilise une plage de synchronisation allant d'une première position d'une mémoire tampon, dans laquelle est mémorisé le train qui est dirigé vers la sortie, pour laquelle la lecture suit l'écriture à un bit près à une deuxième position où la lecture précède l'écriture à un bit près ; ledit procédé comportant les étapes suivantes :

- Comparaison de phase entre les horloges associées aux deux trains à l'aide d'un comparateur de phase dans un état où la lecture suit ou précède l'écriture d'une position dans la mémoire tampon du train qui est dirigé vers la sortie ;
- Recherche d'une synchronisation par blocage du deuxième train sinon passage à la deuxième position de la lecture par rapport à l'écriture grâce à une modification du comparateur de phase, et retour à l'étape précédente ;
- Commutation du premier train sur le deuxième train si au bout de N décalages dans la mémoire tampon on obtient la synchronisation ;
- Commutation du premier train sur le deuxième train si la recherche de synchronisation n'a pas abouti au bout d'un temps déterminé.

L'invention a, en outre, pour objet un dispositif de mise en oeuvre du procédé selon l'une quelconque des revendications précédentes, comprenant deux mémoires tampon à N positions dans lesquelles sont emmagasinés les deux trains, deux dispositifs de blocage de l'écriture dans ces mémoires, un commutateur de sortie permettant de diriger l'un des trains lus vers la sortie, une boucle à verrouillage de phase qui comprend un comparateur de phase caractérisé en ce que cette boucle de verrouillage de phase comprend, en outre, un filtre passe-bas, un "V.C.O." et un diviseur par N rebouclé sur une première entrée du comparateur de phase, la seconde entrée de ce comparateur étant reliée, grâce à un commutateur, à l'une des horloges associées aux deux trains après leur passage dans deux diviseurs par N ; un OU exclusif, recevant en entrée les trains binaires lus dans les deux mémoires tampon, étant connecté à une logique de synchronisation, qui est reliée aux deux dispositifs de blocage d'écriture et aux deux commutateurs,

caractérisé en ce que cette logique de synchronisation est aussi reliée au comparateur de phase, et en ce qu'un dispositif à retard variable est disposé entre le diviseur par N et la deuxième entrée du comparateur de phase, la logique de synchronisation étant reliée à ce dispositif à retard.

Avantageusement ce dispositif comprend au moins un dispositif de retard disposé entre le diviseur par N de la boucle de phase et le comparateur de phase.

Les caractéristiques et avantages de l'invention ressortiront de la description qui va suivre, à titre d'exemple non limitatif, en référence aux dessins annexés sur lesquels :
- la figure 1 illustre une vue schématique d'un dispositif de commutation d'un train binaire sur un autre ;
- la figure 2 illustre une représentation plus détaillée du dispositif représenté à la figure 1 ;
- les figures 3 et 4 illustrent le fonctionnement du dispositif illustré aux figures 1 et 2 ;
- la figure 5 illustre une vue schématique d'un dispositif permettant de mettre en oeuvre le procédé de l'invention ;
- les figures 6, 7, 8 et 9 illustrent le procédé de l'invention ;
- les figures 10 à 19 illustrent différentes variantes de réalisation du dispositif de mise en oeuvre du procédé de l'invention ainsi que le fonctionnement desdites variantes.

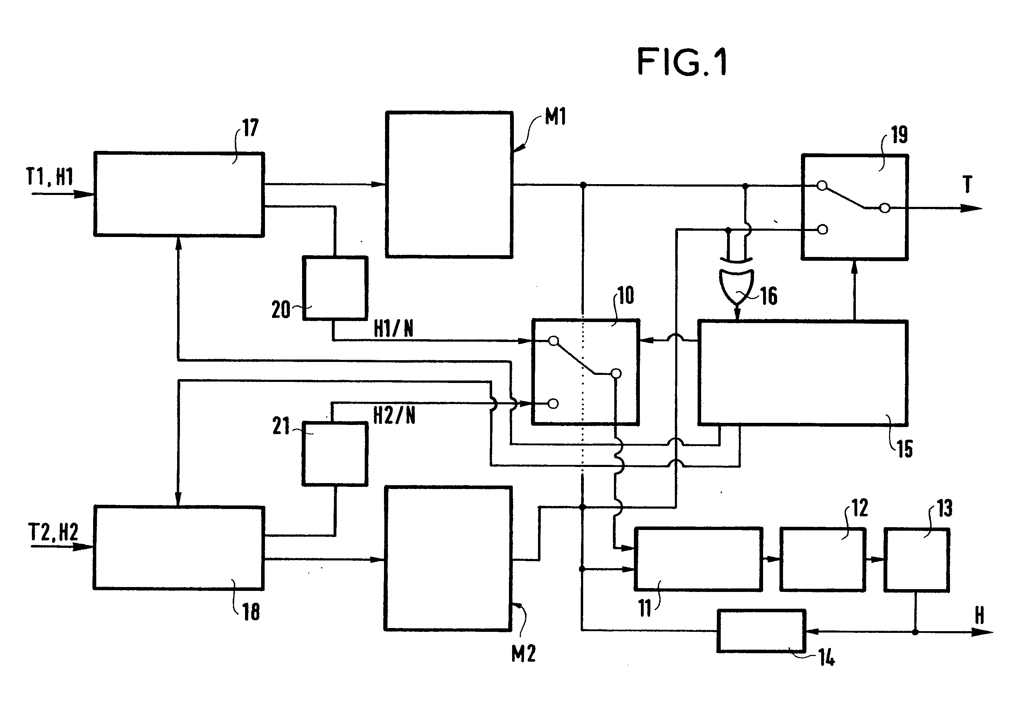

Le dispositif, représenté à la figure 1, permet la commutation d'un canal normal T1, associé à une horloge H1, sur un canal secours T2, associé à une horloge H2. Il comprend deux mémoires tampons de N bits M1 et M2 dans lesquelles l'écriture est effectuée grâce aux horloges H1 et H2, et la lecture Hlec est asservie à l'une des horloges d'écriture H1 ou H2 par l'intermédiaire de la boucle de verrouillage de phase.

Grâce au commutateur 10 à la boucle de phase qui comprend un comparateur de phase 11, un filtre passe-bas 12, un V.C.O 13 ("voltage controlled oscillator") et un diviseur par N 14, une logique de synchronisation 15, associée à un OU exclusif 16, permet de commander le dispositif de blocage d'écriture 17 et 18 du canal qui est la sortie. Ce train binaire est sélectionné grâce au commutateur 19. Il lui est associé l'horloge H obtenue dans la boucle de phase.

Les signaux qui sont entrés sur le commutateur 10 sont les horloges H1/N et H2/N obtenues à la sortie de deux diviseurs par N 20 et 21.

En fonctionnement l'écart entre les deux trains binaires, celui du canal normal considéré T1 et celui du canal secours T2, est inconnu : les deux trains sont identiques mais décalés de X bits en avance ou en retard. Ils ont la même cadence.

Pour réaliser la synchronisation de ces deux trains binaires incidents, on effectue une écriture de ces deux trains binaires T1 et T2 dans deux mémoires tampons de N bits M1 et M2. En l'occurrence il s'agit de N bascules D. En bloquant l'écriture de l'un des deux trains on peut effectuer une synchronisation dans une certaine plage.

On lit, alors, simultanément, à l'aide de l'horloge Hlec, dans les cases mémoires de même rang des deux mémoires tampons M1 et M2. Un blocage de l'écriture du canal qui n'est pas dirigé vers la sortie binaire (le canal 2 sur la figure 1) va décaler le train binaire correspondant par rapport à l'autre.

Avec le OU exclusif 16 on compare bit à bit les deux trains lus dans les mémoires M1 et M2 pendant un certain temps. Si le nombre d'erreurs est grand, alors on effectue un nouveau blocage de l'écriture.

Si par contre les deux trains sont identiques alors on va pouvoir faire une commutation. Cette commutation a lieu en deux temps : Les décalages dans les mémoires tampons étant des nombres entiers de bit, on fait donc, dans un premier temps, une commutation de phase en basculant l'entrée du comparateur de phase 11 sur l'horloge écriture H2 du canal T2 qui va servir. Dans un deuxième temps on effectue la commutation du train binaire de sortie. Celle-ci a lieu après que la phase ait rattrapé une partie du chemin à parcourir.

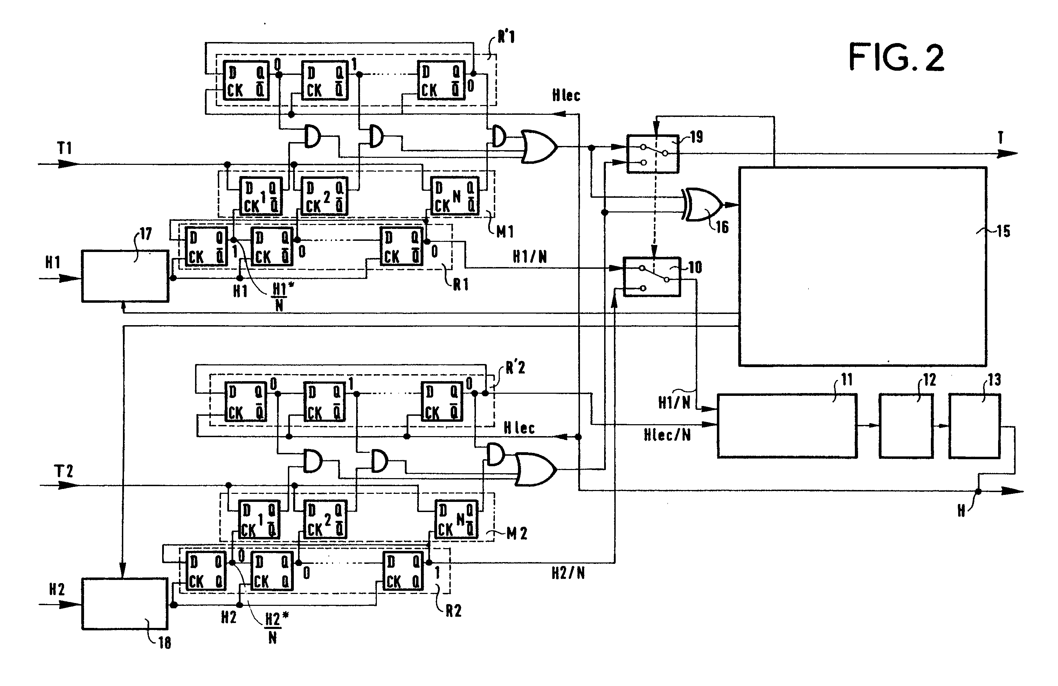

Sur la figure 2 on distingue les N bascules D qui constituent la mémoire tampon M1 correspondant au premier canal T1. On voit également N bascules qui donnent la séquence d'écriture dans cette mémoire tampon M1. Il s'agit d'un registre à décalage R1 rebouclé sur lui-même. Il est initialisé avec un "1" parmi N-1 "O". De même un registre à décalage R1' à N bascules autorise la lecture. Il est initialisé avec un "1" parmi N-1 "O", mais la position du "1" n'est pas la même que pour l'écriture. De manière analogue on a deux registres à décalages R2 et R2' correspondant au deuxième canal T2. La position du "1" dans le registre qui séquence la lecture est la même pour les deux canaux : on lit les cases mémoires de même rang simultanément dans les deux mémoires tampons M1 et M2.

Les trains T1 et T2 sont envoyés simultanément sur toutes les entrées des différentes bascules constituant les mémoires M1 et M2, mais ils ne sont mémorisés que sur les bascules qui auront un front montant sur leur entrée horloge (CK).

On ne peut pas écrire et lire simultanément une case de la mémoire tampon puisque son contenu bouge pendant l'écriture.

Les horloges écriture du canal qui sort et lecture divisées par N : H1/N, Hlec/N sont appliquées aux entrées du comparateur de phase 11. Le registre à décalage pour la lecture du canal 2 est utilisé comme diviseur par N dans la boucle a verrouillage de phase.

Dans les procédés de l'art connu, on se contente d'une seule position d'équilibre en effectuant dans chaque mémoire tampon M1, M2, une lecture en opposition de phase avec l'écriture, N étant pair :

si on écrit dans la bascule 1, on lit dans la bascule $\frac{N}{2} + 1$,

si on écrit dans la bascule 2, on lit dans la bascule $\frac{N}{2} + 2...$

si on écrit dans la bascule $\frac{N}{2}$, on lit dans la bascule N,

si on écrit dans la bascule $\frac{N}{2} + 1$, on lit dans la bascule 1.

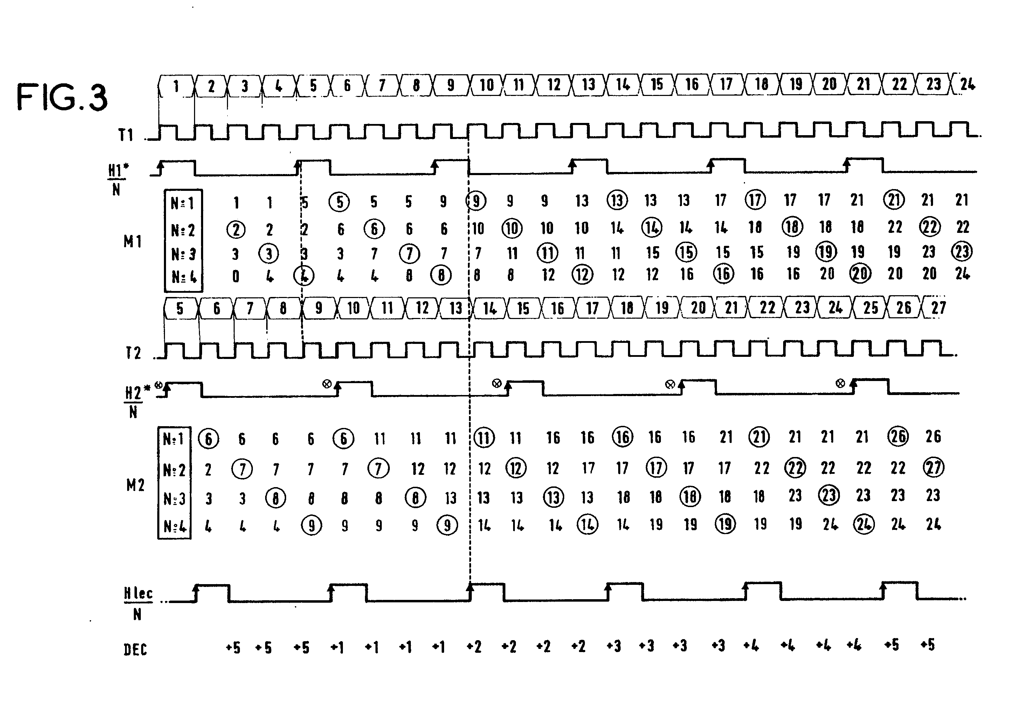

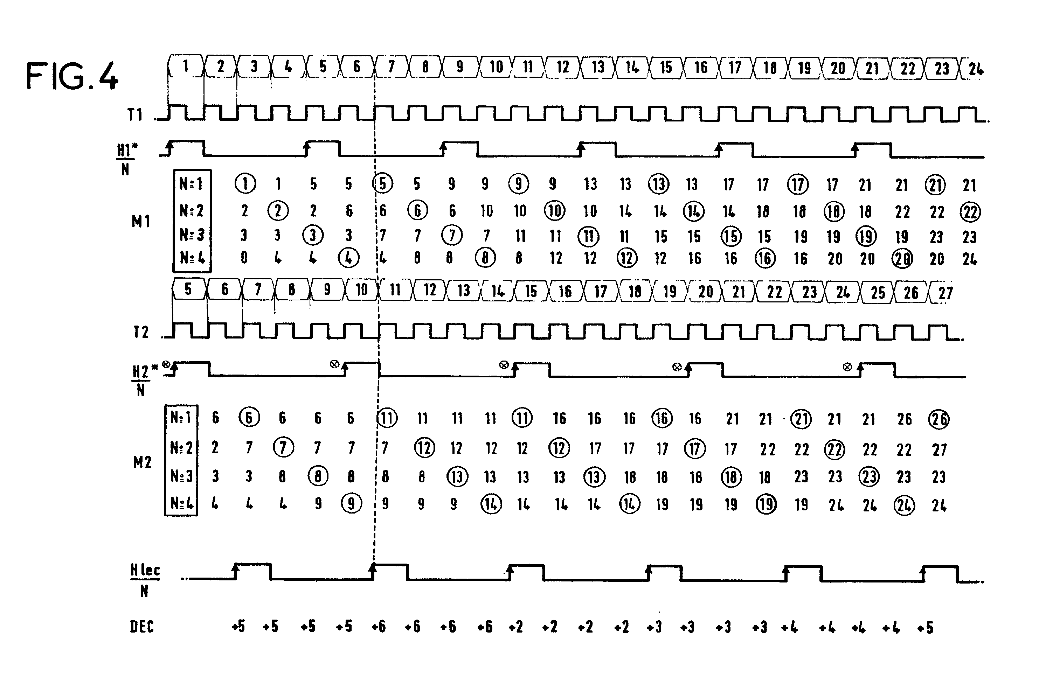

Aux figures 3 et 4 on examine deux cas particuliers où l'on a une horloge de lecture Hlec respectivement en quadrature et en opposition de phase avec l'horloge d'écriture H1 du canal 1 qui sort.

Les traits pointillés verticaux sont des repères qui visualisent l'écart entre les deux trains T1 et T2 et l'écart de phase entre H1/N et Hlec/N.

Les nombres entourés sont les bits qui sont lus et comparés au rythme de l'horloge de lecture Hlec.

La fréquence des blocages de l'horloge H2 est augmentée. Normalement le décalage une fois fait on compare les deux trains T1 et T2 sur un grand nombre de bits.

Les blocages de l'horloge sont marqués : ⊗

A titre d'exemple sur la figure 3 on a pris un décalage X : X = +4,25 avec N = 4 et l'horloge de lecture Hlec/N en quadrature avec l'horloge H1*/N (prise à la sortie de la première bascule de M1).

Il y a avance du contenu de la mémoire M2 par rapport à celui de la mémoire M1.

On remarque que l'on peut faire varier le décalage DEC entre les trains T1 et T2 d'un nombre entier de bit de X-3 à X+1 (ici X = 4,25) en effectuant des sauts d'horloge aux endroits marqués ⊗ (blocage de l'écriture du canal qui ne sert pas). Dans le cas représenté, il n'y a jamais synchronisation puisque le décalage entre les deux trains ne passe jamais par zéro.

Sur la figure 4 on a pris un décalage X : X = +4,25 avec N = 4 et l'horloge de lecture Hlec/N en opposition de phase avec l'horloge H1*/N (prise à la sortie de la première bascule de M1).

Il y a, dans ce cas avance du contenu de la mémoire M2 par rapport à la mémoire M1.

On remarque que l'on peut maintenant faire varier le décalage DEC entre les trains T1 et T2 d'un nombre entier de bit de X-2 à X+2 en effectuant des sauts d'horloge aux endroits marqués ⊗. Dans ce cas il n'y a, également, jamais synchronisation puisque le décalage entre les deux trains lus ne passe jamais par zéro.

Le procédé de l'invention, qui ne se limite plus à une seule position d'équilibre du comparateur de phase de la boucle, permet d'augmenter la plage de synchronisation. En effet si l'écart de phase entre l'horloge d'écriture H1 du canal qui sert et l'horloge de lecture Hlec est fixée on peut avoir une plage de synchronisation théorique de N+1 bit (En pratique un peu moins compte tenu du fait que l'on ne peut pas écrire en même temps qu'on lit dans la mémoire tampon et de l'existence d'effets de bords ; soit donc un peu moins de N bit).

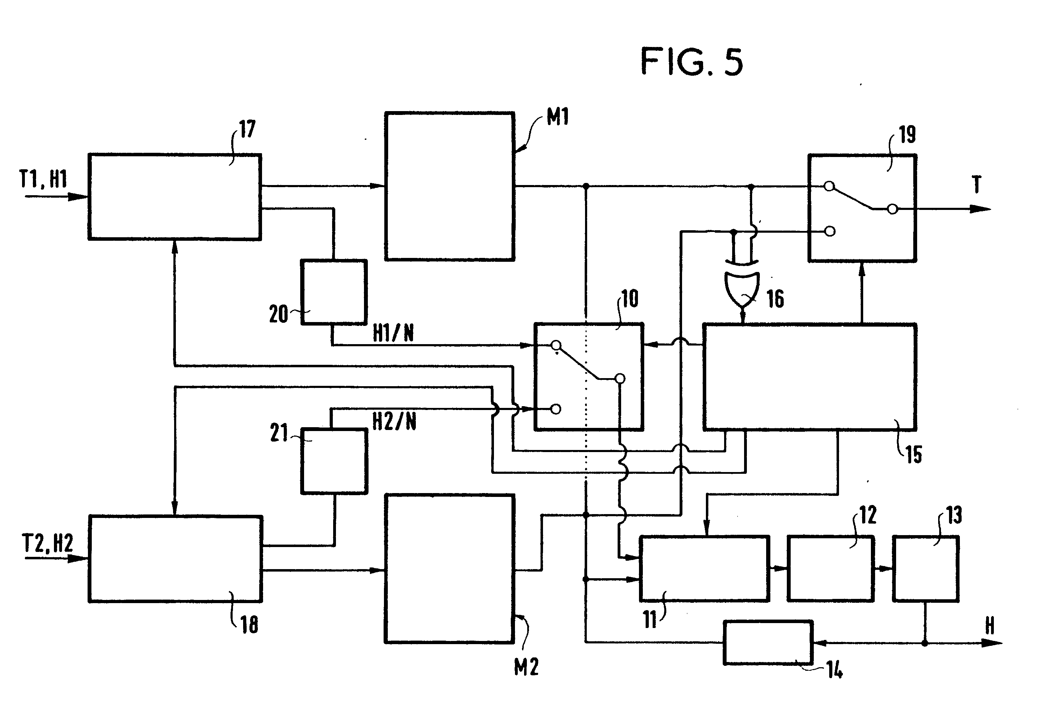

Par contre dans le dispositif de l'invention la logique de synchronisation peut agir sur le comparateur de la boucle à verrouillage de phase, comme représenté à la figure 5, alors la plage de synchronisation va de X-N+1 à X+N-1.

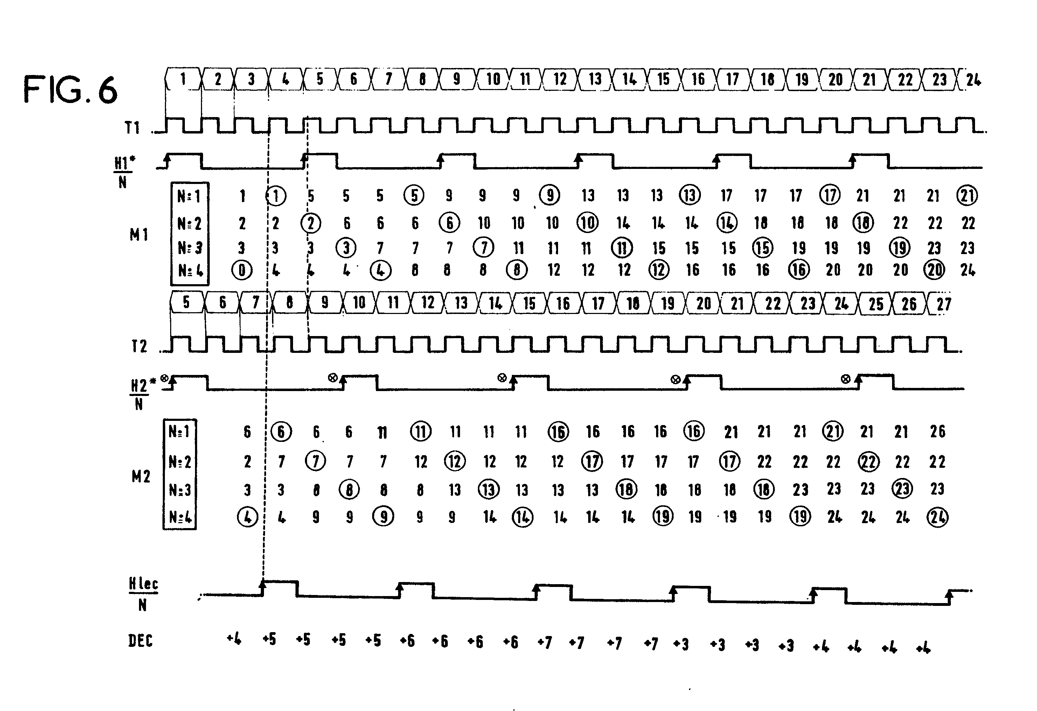

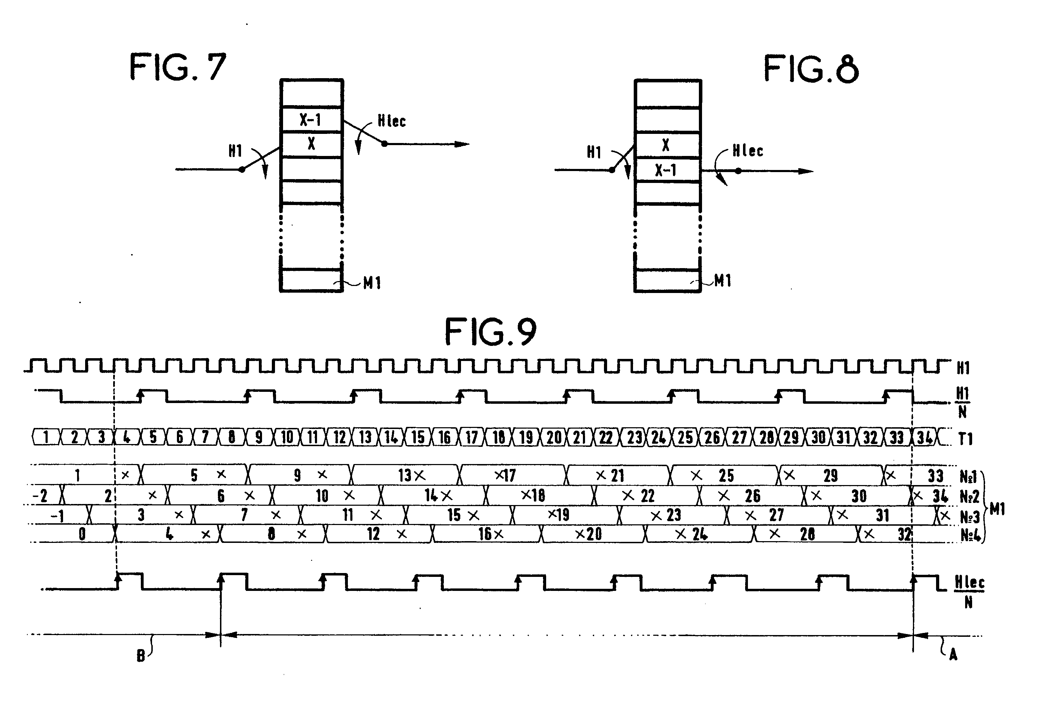

On vérifie facilement cela sur un exemple représenté à la figure 6 avec : N = 4 et X = +4,25.

On a vu précédemment que, si la lecture a lieu avec un bit de retard par rapport à la lecture, on peut avoir une plage de synchronisation de X-3 à X+1.

Dans l'exemple représenté, l'horloge de lecture Hlec/N a une "avance" de un bit par rapport à l'horloge d'écriture H1*/N : on obtient bien une plage de synchronisation X-1 à X+3. Ce résultat est vérifié également pour une mémoire tampon N bit et un décalage X quelconque entre les trains.

On obtient donc un plage de synchronisation maximale quand la lecture suit ou précède de un bit l'écriture du canal qui sert ; on appellera dans la suite ces deux positions respectivement "cas A" et "cas B".

Pour passer du cas A, représenté à la figure 7, au cas B, représenté à la figure 8, il faut ralentir la lecture et pour passer du cas B au cas A il faut accélérer la lecture. En effect on ne peut pas envisager de lire et d'écrire en même temps dans une même position de la mémoire tampon N bits.

Le passage de A à B, et réciproquement, est réalisable à condition que la période de lecture ne subisse pas de trop grande variation pendant le changement d'écart de phase entre lecture et écriture. C'est le cas avec la boucle à verrouillage de phase qui intègre les écarts de phase. Une deuxième contrainte est que le contenu du message binaire ne soit pas modifié à cause du saut de phase et c'est le cas comme on va le voir sur un exemple.

Le canal qui ne sert pas ne nous intéresse pas pendant le saut de phase.

Si on prend comme exemple le passage du cas B au cas A dans une mémoire tampon de 4 bits, on distingue sur la figure 9 l'horloge écriture H1, et divisée par N : H1/N, le train binaire incident par exemple T1 qui doit être transmis en sortie sans altération de son contenu et le contenu des quatre cases de la mémoire tampon. Les croix "x" indiquent les instants de lecture des cases mémoires.

Pendant le saut de phase, durant le temps mis par la boucle à verrouillage de phase pour se stabiliser sur la position A, l'horloge de lecture est accélérée. Ceci a pour effet de raccourcir la durée des bits du train de sortie. Le rôle de la boucle à verrouillage est d'intégrer le saut de phase sur un temps suffisamment long pour que la gigue ainsi engendrée soit acceptable par les équipements qui suivent. Sur le schéma ce temps est bien sûr très raccourci, il peut porter sur plusieurs milliers de bits.

On part de la position B, c'est-à-dire que la lecture a lieu "un bit" avant l'écriture. Ceci se voit entre autre par le fait que la croix précède le chargement du contenu des cases mémoires. On arrive à la position A, après le saut de phase, où la lecture a lieu "un bit" après l'écriture. La croix est alors juste après le changement de valeur dans les cases mémoires.

On constate que le contenu des cases lues est le même que si l'horloge n'était pas accélérée pendant le saut de phase de B vers A. Le message binaire n'est donc pas altéré.

Il est également clair que lors d'un passage du cas A vers le cas B, l'instant de lecture marqué par "x" se déplace en sens inverse. L'horloge de lecture Hlec est cette fois ralentie. Le contenu des cases de la mémoire qui sont lues ne changent pas du fait du saut de phase : le message binaire n'est pas altéré.

Le procédé de l'invention peut ainsi comporter les étapes suivantes :

1 - Comparaison de phase dans l'état A ou B.

2 - Recherche d'une synchronisation par blocage du canal qui ne sert pas par exemple T2. (Blocage de l'écriture en mémoire M2).

3 - Si au bout de N décalages possibles on a trouvé la synchronisation, alors on commute brutalement ici du canal T1 en service sur le canal T2 de secours. On a donc le canal T2 en sortie.

4 - Sinon on change alors l'état du comparateur de phase et on recommence en 2.

5 - Si après un certain temps cette recherche n'a pas aboutie on commute du canal T1 sur le canal T2.

Le procédé de l'invention comporte une variante qui consiste à agir alternativement sur les blocages de l'horloge et sur des petites variations de l'écart de phase entre lecture et écriture, avec des bonds de $\Delta \phi = \frac{2\pi}{N}$ par exemple.

Si l'on considère la boucle de verrouillage de phase, pendant le saut de phase on veut pouvoir agir sur le sens de variation de la fréquence (plus ou moins rapide). On veut agir également sur l'écart de phase appliqué entre l'horloge écriture (divisée par N) et l'horloge lecture (divisée par N) dans les deux positions d'équilibre A et B.

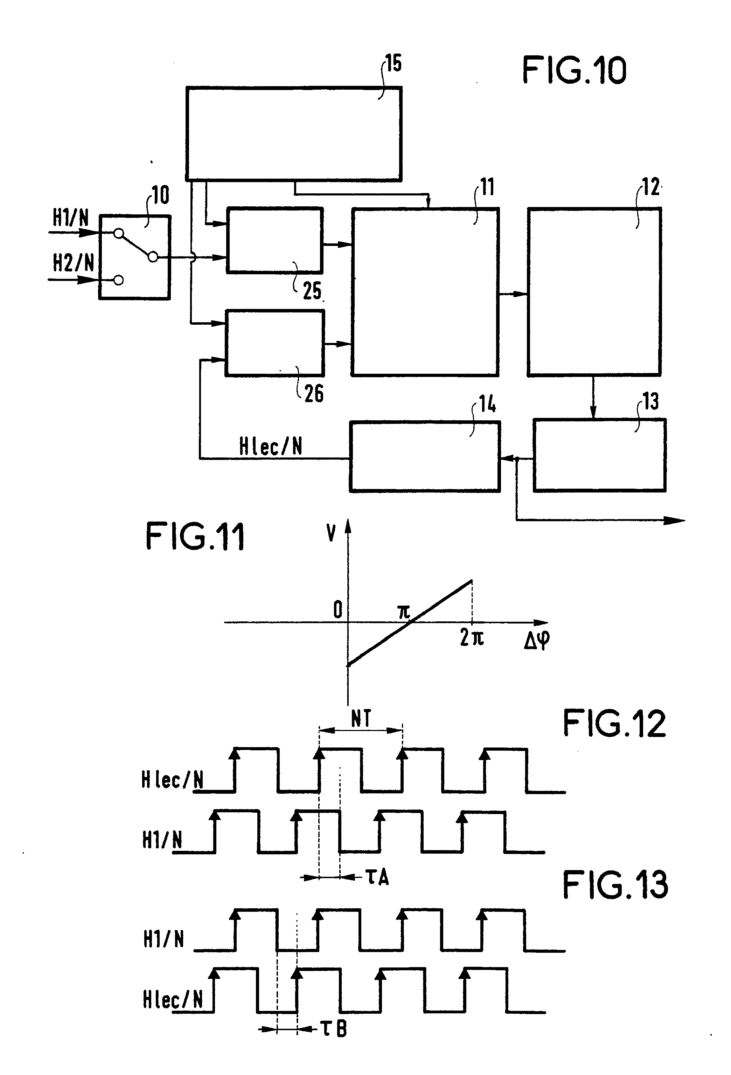

Une première solution consiste, comme représenté à la figure 10, à utiliser un comparateur de phase centré autour de $\Delta \phi = \pi$ comme représenté à la figure 11 et de deux retards variables tels que le saut de phase (A↔B) soit réalisé en deux fois à l'aide de deux dispositifs 25 et 26 permettant de réaliser deux retards 1 et 2 variables.

Dans le cas A comme représenté à la figure 12, on veut que l'horloge de lecture divisée par N soit en retard de un bit sur l'horloge d'écriture divisée par N. On a donc un écart entre l'équilibre et Hlec/N de $\tau_A = (\frac{N}{2} - 1) T$, N étant pair. C'est le retard 1 qui vaut $\tau_A$ et le retard 2 vaut zéro. Le retard 1 est appliqué à l'horloge d'écriture.

De même dans le cas B, représenté à la figure 13, $\tau_B = (\frac{N}{2} - 1) T$.

Le retard est maintenant appliqué à l'horloge de lecture. Le retard 2 vaut $\tau_B$ et le retard 1 vaut zéro.

Dans cette solution les retards 1 et 2 passent pas les mêmes valeurs 0 et

$$\frac{N-2}{2} T.$$

Il faut faire basculer les retards 1 et 2 successivement et non pas en même temps pour que les sauts de phases soient

$$\Delta \Psi = \frac{N-1}{2N} \times 2\pi$$

ou bien on utilise un comparateur de phase sur une plage de $4\pi$.

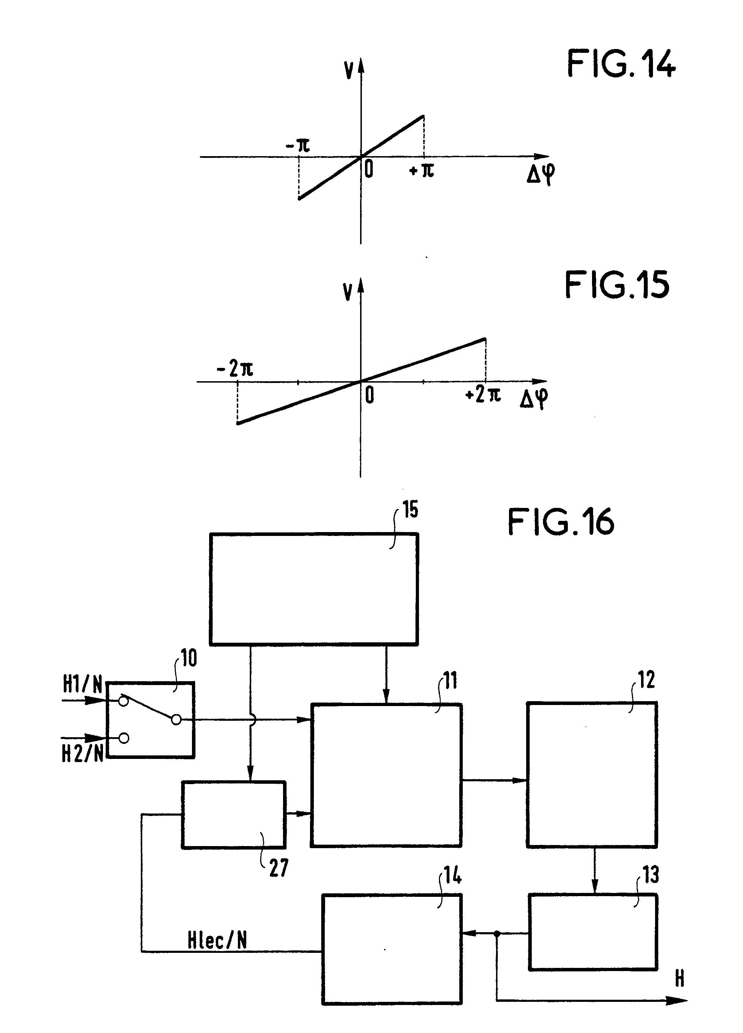

Dans une deuxième solution on utilise un comparateur de phase ayant une courbe de réponse représentée à la figure 14.

Le saut de phase est réalisé en deux fois. Il est scindé en deux moitiés égales : on attend d'être assez proche de l'équilibre pour effectuer le deuxième saut de phase.

Dans une troisième solution on utilise un comparateur de phase centré autour de $\Delta \phi = 0$ comme représenté à la figure 15 et un retard variable 27 comme sur le schéma représenté à la figure 16.

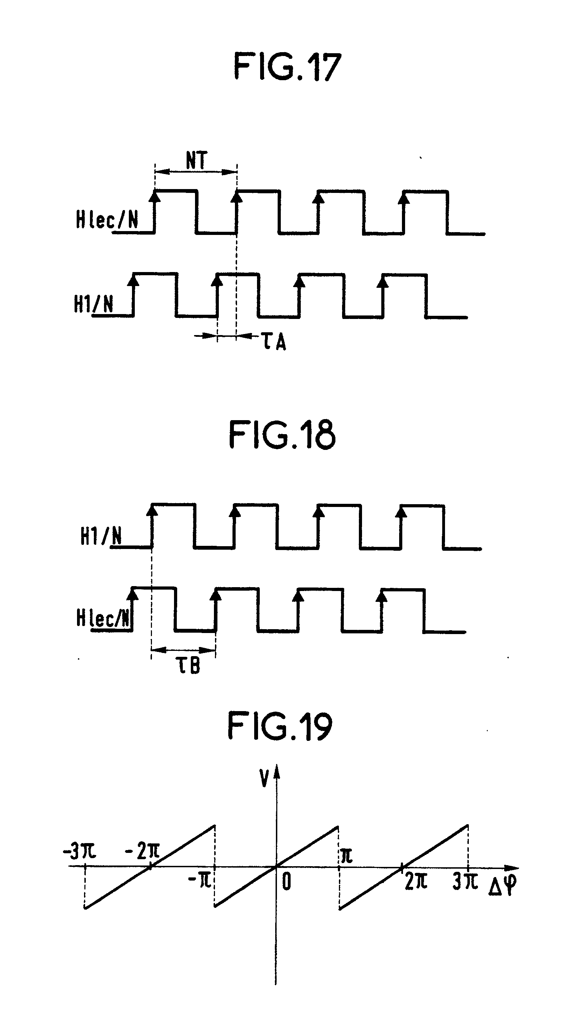

Dans le cas A, comme représenté à la figure 17 on veut que l'horloge Hlec/N soit en retard par rapport à l'horloge H1/N de un bit. Ce retard est $\tau_A$. Soit T la période de Hlec on a $\tau_A = T$.

Dans le cas B, comme représenté à la figure 18, on veut que l'horloge de lecture Hlec/N soit en retard par rapport à H1/N de N-1 bit. On a donc $\tau_B = (N-1) T$. Le saut de phase est donc

$$\Delta \Psi = \frac{(N-2)}{N} \times 2\pi$$

entre

$$\frac{2\pi}{N} \quad \text{et} \quad \frac{N-1}{N} \times 2\pi.$$

Pour s'affranchir du signal d'indication de sens de rattrapage de l'écart de phase entre la logique de synchronisation et le comparateur de phase on peut morceler les sauts de phase en petits sauts successifs avec $\Delta \phi\, i < \pi$ ,ou bien utiliser un comparateur qui accepte des sauts de

$$\Delta \varphi = \frac{N-2}{N} \times 2\pi \text{ entre } \frac{2\pi}{N} \text{ et } \frac{N-1}{N} \times 2\pi$$

comme représenté à la figure 19.

Le dispositif de l'invention présente donc le gros avantage de fournir une plage de synchronisation étendue avec un temps de recherche de synchronisation qui comprend le temps d'intégration des sauts de phase par la boucle à verrouillage de phase notamment.

## Revendications

1. Procédé de synchronisation de deux trains binaires (T1, T2) en vue de faire une commutation du premier train sur le second, caractérisé en ce que l'on utilise une plage de synchronisation allant d'une première position d'une mémoire tampon, dans laquelle est mémorisé le train qui est dirigé vers la sortie, pour laquelle la lecture suit l'écriture à un bit près (cas A) à une deuxième position où la lecture précède l'écriture à un bit près (cas B) ; ledit procédé comportant les étapes suivantes :
   - Comparaison de phase entre les horloges associées aux deux trains à l'aide d'un comparateur de phase dans un état où la lecture suit ou précède l'écriture d'une position dans la mémoire tampon du train qui est dirigé vers la sortie ;
   - Recherche d'une synchronisation par blocage du deuxième train (T2), sinon passage à la deuxième position de la lecture par rapport à l'écriture grâce à une modification du comparateur de phase, et retour à l'étape précédente ;
   - Commutation du premier train sur le deuxième train si au bout de N décalages dans la mémoire tampon on obtient la synchronisation.

2. Procédé selon la revendication 1 , caractérisé en ce qu'il y a commutation du premier train (T1) sur le deuxième train (T2) si la recherche de synchronisation n'a pas abouti au bout d'un temps déterminé.

3. Dispositif de mise en oeuvre du procédé selon l'une quelconque des revendications précédentes, comprenant deux mémoires tampon (M1, M2) à N positions dans lesquelles sont emmagasinés les deux trains (T1, T2), deux dispositifs de blocage de l'écriture (17, 18) dans ces mémoires (M1, M2), un commutateur de sortie (19) permettant de diriger l'un des trains lus vers la sortie, une boucle à verrouillage de phase qui comprend un comparateur de phase (11) caractérisé en ce que cette boucle de verrouillage de phase comprend, en outre, un filtre passe-bas (12), un "V.C.O." (13) et un diviseur par N (14) rebouclé sur une première entrée du comparateur de phase (11), la seconde entrée de ce comparateur étant reliée, grâce à un commutateur (10), à l'une des horloges associées aux deux trains (H1, H2) après leur passage dans deux diviseurs par N ; un OU exclusif (16), recevant en entrée les trains binaires lus dans les deux mémoires tampon (M1, M2), étant connecte' à une logique de synchronisation (15), qui est reliée aux deux dispositifs de blocage d'écriture (17, 18) et aux deux commutateurs (10, 19), de plus caractérisé en ce que cette logique de synchronisation est aussi reliée au comparateur de phase (11), et en ce qu'un dispositif à retard Réglable (26, 27) est disposé entre le diviseur par N (14) et la deuxième entrée du comparateur de phase (11), la logique de synchronisation (15) étant reliée à ce dispositif à retard.

4. Dispositif selon la revendication 3 , caractérisé en ce qu'un second dispositif de retard réglable (25) est disposé entre le premier commutateur (10) et la première entrée du comparateur de phase (11), et en ce que le premier dispositif de retard réglable (26) est disposé entre le diviseur par N (14) et la deuxième entrée du comparateur de phase (11), la logique de synchronisation (15) étant reliée à ces deux dispositif de retard (25, 26).

5. Dispositif selon la revendication 4, caractérisé en ce que le comparateur de phase a une courbe de réponse $V = f(\Delta \phi)$ qui varie entre 0 et $2\pi$.

6. Dispositif selon la revendication 4, caractérisé en ce que le comparateur de phase a une courbe de réponse V = f( $\Delta \phi$ ) qui varie entre - $\pi$ et + $\pi$.

7. Dispositif selon la revendication 6, caractérisé en ce que le comparateur de phase a une courbe de réponse V = f( $\Delta \phi$ ) qui varie entre -2 $\pi$ à +2 $\pi$.

**Claims**

1. A method of synchronizing two binary trains (T1, T2) in order to switch from the first train to the second, characterized in that a synchronization range is used extending between a first position in a buffer memory storing the train which is directed to the output and for which reading follows writing by one bit period (case A), to a second position where reading precedes writing by one bit period (case B); said method comprising the following steps:
   - comparing phases between the clocks associated with the two trains by means of a phase comparator, said comparison taking place in a state where reading follows or precedes writing by one position in the buffer memory for the train which is directed to the output;
   - seeking synchronization by inhibiting the second train (T2) or else passing to the second position for reading relative to writing by modifying the phase comparator and returning to the preceding step; and
   - switching from the first train to the second train if synchronization is obtained after N shifts in the buffer memory.

2. A method according to claim 1, characterized in that switching takes place from the first train (T1) to the second train (T2) if synchronization is not found after searching for a predetermined length of time.

3. An apparatus for implementing the method according to any preceding claim, comprising two buffer memories (M1, M2) having N positions each for storing one of the two trains (T1, T2), two write inhibit devices (17, 18) in said memories (M1, M2), an output switch (19) adapted to direct one of the pulse trains read towards the output, a phase locked loop which includes a phase comparator (11), characterized in that the phase locked loop further comprises a low pass filter (12), a voltage controlled oscillator (13), and a divide-by-N circuit (14) fed back to a first input of the phase comparator, the second input of this comparator being connected via a switch (10) to one of the clocks (H1, H2) associated with the two trains after passing through two divide-by-N circuits; an exclusive-OR gate (16) which receives the binary trains read from the two buffer memories (M1, M2) and which is connected to a synchronization logic circuit (15), which in turn is connected to the two inhibit devices (17, 18) and to the two switches (10, 19), in addition characterized in that said synchronization logic is also connected to the phase comparator (11); and in that an adjustable delay device (26, 27) is disposed between the divide-by-N circuit (14) and the second input of the phase comparator (11), with the synchronization logic circuit (15) being connected to said delay device.

4. An apparatus according to claim 3, characterized in that a second adjustable delay device (25) is disposed between the first switch (10) and the first input to the phase comparator (11), and in that the first adjustable delay device (26) is disposed between the divide-by-N circuit (14) and the second input to the phase comparator (11), with the synchronization logic circuit (15) being connected to both delay devices (25, 26).

5. An apparatus according to claim 4, characterized in that the phase comparator has a response curve V = f( $\Delta \phi$ ) which ranges from 0 to 2 $\pi$.

6. An apparatus according to claim 4, characterized in that the phase comparator has a response curve V = f( $\Delta \phi$ ) which ranges from - $\pi$ to + $\pi$.

7. An apparatus according to claim 6, characterized in that the phase comparator has a response curve V = f ( $\Delta \phi$ ) which ranges from -2 $\pi$ to +2 $\pi$.

**Patentansprüche**

1. Verfahren zum Synchronisieren von zwei Binärdatenströmen (T1, T2) im Hinblick auf ein Umschalten des ersten Stroms auf den zweiten, dadurch gekennzeichnet, daß man einen Synchronisationsbereich benutzt, der von einem ersten Platz in einem Pufferspeicher, in welchem der zum Ausgang gerichtete Strom gespeichert ist und das Lesen dem Schreiben bis auf ein einziges Bit (Fall A) Abstand nachfolgt, bis zu einem zweiten Platz reicht, wo das Lesen dem Schreiben bis auf ein einziges Bit (Fall B) vorausgeht, wobei das Verfahren folgende Schritte aufweist:

- Phasenvergleich zwischen den den beiden Datenströmen zugeordneten Taktgebern, durch einen Phasenkomparator in einem Betriebszustand, bei dem im Pufferspeicher das Auslesen des Datenstroms, der zum Ausgang gerichtet ist, dem Einschreiben um einen Platz nachfolgt oder vorausgeht,
- Synchronisierungssuche durch Sperren des zweiten Datenstroms (T2), oder stattdessen Übergang zum zweiten Datenausleseplatz relativ zum Einschreibeplatz aufgrund einer Modifikation des Phasenkomparators, und Rückkehr zur vorhergehenden Stufe, und
- Umschalten des ersten Datenstroms auf den zweiten Datenstrom, falls nach N Platzverschiebungen im Pufferspeicher die Synchronisation erreicht wird.

2. Verfahren nach Anspruch 1, dadurch gekennzeichnet, daß eine Umschaltung das ersten Datenstroms (T1) auf den zweiten Datenstrom erfolgt, falls die Synchronisationssuche nicht nach einer bestimmten Zeit zum Erfolg geführt hat.

3. Anordnung zur Durchführung des Verfahrens nach einem der vorhergehenden Ansprüche, mit zwei Pufferspeichern (M1, M2) mit je N Speicherplätzen, in denen die beiden Datenströme (T1, T2) gespeichert sind, zwei Schreibsperren (17, 18) in den Pufferspeichern (M1, M2), einem Ausgangsumschalter (19) zum Anlegen eines der gelesenen Datenströme an den Ausgang, und einer Phasenblockierschleife, die einen Phasenkomparator (11) aufweist, dadurch gekennzeichnet, daß diese Phasenblockierschleife weiter ein Tiefpaßfilter (12), einen spannungsgesteuerten Oszillator "V.C.O." (13) und einen durch N teilenden Teilkreis (14) aufweist, der auf den ersten Eingang des Phasenkomparators (11) rückgekoppelt ist, wobei der zweite Eingang des Komparators durch einen Schalter (10) an einen der mit den Datenströmen verbundenen Taktgeber (H1, H2) nach Durchgang der Ströme durch den durch N teilenden Teilkreis umgeschaltet wird, wobei ein Exklusiv-ODER-Tor (16), das am Eingang die aus den beiden Pufferspeichern (M1, M2) ausgelesenen Binärdatenströme empfängt, an eine Synchronisationslogik (15) angeschlossen ist, die mit den beiden Schreibsperren (17, 18) und den beiden Schaltern (10, 19) verbunden ist, und daß die Einrichtung weiter dadurch gekennzeichnet ist, daß die Synchronisationslogik zudem mit dem Phasenkomparator (11) verbunden ist, und daß eine steuerbare Verzögerungseinrichtung (26, 27) zwischen dem durch N teilenden Teilkreis (14) und dem zweiten Eingang des Phasenkomparators (11) angeordnet ist, wobei die Synchronisationslogik (15) an die Verzögerungseinrichtung angeschlossen ist.

4. Anordnung nach Anspruch 3, dadurch gekennzeichnet, daß eine zweite steuerbare Verzögerungseinrichtung (25) zwischen dem ersten Schalter (10) und dem ersten Eingang des Phasenkomparators (11) angeschlossen ist, und daß die erste steuerbare Verzögerungseinrichtung (26) zwischen dem durch N teilenden Teiler (14) und dem zweiten Eingang des Phasenkomparators (11) angeschlossen ist, wobei die Synchronisationslogik (15) an diese beiden Verzögerungseinrichtungen (25, 26) angeschlossen ist.

5. Anordnung nach Anspruch 4, dadurch gekennzeichnet, daß der Phasenkomparator eine Ansprechkurve $V = f(\Delta\phi)$ besitzt, die zwischen 0 und $2\pi$ variiert.

6. Anordnung nach Anspruch 4, dadurch gekennzeichnet, daß der Phasenkomparator eine Ansprechkurve $V = f(\Delta\phi)$ besitzt, die zwischen $-\pi$ und $+\pi$ variiert.

7. Anordnung nach Anspruch 4, dadurch gekennzeichnet, daß der Phasenkomparator eine Ansprechkurve $V = f(\Delta\phi)$ besitzt, die zwischen $-2\pi$ und $+2\pi$ variiert.

# FIG.1

EP 0 249 930 B1

FIG.2

EP 0 249 930 B1

FIG.3

## FIG.4

$\dfrac{H1^*}{N}$

| | | | | | | | | | | | | | | | | | | | | | | | |
|---|---|---|---|---|---|---|---|---|---|---|---|---|---|---|---|---|---|---|---|---|---|---|---|
| N=1 | ① | 1 | 5 | 5 | ⑤ | 5 | 9 | 9 | ⑨ | 9 | 13 | 13 | ⑬ | 13 | 17 | 17 | ⑰ | 17 | 21 | 21 | ㉑ | 21 |
| N=2 | 2 | ② | 2 | 6 | 6 | ⑥ | 6 | 10 | 10 | ⑩ | 10 | 14 | 14 | ⑭ | 14 | 18 | 18 | ⑱ | 18 | 22 | 22 | ㉒ |
| N=3 | 3 | 3 | ③ | 3 | 7 | 7 | ⑦ | 7 | 11 | 11 | ⑪ | 11 | 15 | 15 | ⑮ | 15 | 19 | 19 | ⑲ | 19 | 23 | 23 |
| N=4 | 0 | 4 | 4 | ④ | 4 | 8 | 8 | ⑧ | 8 | 12 | 12 | ⑫ | 12 | 16 | 16 | ⑯ | 16 | 20 | 20 | ⑳ | 20 | 24 |

M1

T2

$\dfrac{H2^*}{N}$

| | | | | | | | | | | | | | | | | | | | | | | | |
|---|---|---|---|---|---|---|---|---|---|---|---|---|---|---|---|---|---|---|---|---|---|---|---|
| N=1 | 6 | ⑥ | 6 | 6 | 6 | ⑪ | 11 | 11 | 11 | ⑪ | 16 | 16 | 16 | ⑯ | 16 | 21 | 21 | ㉑ | 21 | 21 | 26 | ㉖ |
| N=2 | 2 | 7 | ⑦ | 7 | 7 | 7 | ⑫ | 12 | 12 | 12 | ⑫ | 17 | 17 | 17 | ⑰ | 17 | 22 | 22 | ㉒ | 22 | 22 | 27 |
| N=3 | 3 | 3 | 8 | ⑧ | 8 | 8 | 8 | ⑬ | 13 | 13 | 13 | ⑬ | 18 | 18 | 18 | ⑱ | 18 | 23 | 23 | ㉓ | 23 | 23 |
| N=4 | 4 | 4 | 4 | 9 | ⑨ | 9 | 9 | 9 | ⑭ | 14 | 14 | 14 | ⑭ | 19 | 19 | 19 | ⑲ | 19 | 24 | 24 | ㉔ | 24 |

M2

$\dfrac{H\,lec}{N}$

DEC  +5 +5 +5 +5 +6 +6 +6 +6 +2 +2 +2 +2 +3 +3 +3 +3 +4 +4 +4 +4 +5

EP 0 249 930 B1

# FIG. 5

EP 0 249 930 B1

FIG.6

# FIG.7

X-1
X

H1

Hlec

M1

# FIG.8

X
X-1

H1

Hlec

M1

# FIG.9

H1

H1/N

T1

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 |

| 1 | × | 5 | × | 9 | × | 13× | ×17 | × 21 | × 25 | × 29 | × 33 | №1 |
| -2 | 2 | × | 6 | × | 10 | × | 14× | ×18 | × 22 | × 26 | × 30 | × 34 | №2 |
| -1 | 3 | × | 7 | × | 11 | × | 15 × | ×19 | × 23 | × 27 | × 31 | × | №3 |
| 0 | 4 | × | 8 | × | 12 | × | 16× | ×20 | × 24 | × 28 | × 32 | №4 |

M1

Hlec/N

B

A

# FIG.10

# FIG.11

# FIG.12

# FIG.13

FIG.14

FIG.15

FIG.16

## FIG.17

## FIG.18

## FIG.19